**Europäisches Patentamt**

**European Patent Office**

**Office européen des brevets**

(19)

(11) Veröffentlichungsnummer: **0 323 566 B1**

# EUROPÄISCHE PATENTSCHRIFT

(12)

(45) Veröffentlichungstag der Patentschrift: **17.03.93**

(51) Int. Cl.5: **H02P 3/26**

(21) Anmeldenummer: **88119655.4**

(22) Anmeldetag: **25.11.88**

(54) **Antriebsvorrichtung.**

(30) Priorität: **04.12.87 DE 3741133**

(43) Veröffentlichungstag der Anmeldung:
**12.07.89 Patentblatt 89/28**

(45) Bekanntmachung des Hinweises auf die
Patenterteilung:
**17.03.93 Patentblatt 93/11**

(84) Benannte Vertragsstaaten:
**DE FR GB**

(56) Entgegenhaltungen:
**DE-A- 1 800 179**
**DE-U- 8 716 049**
**US-A- 3 774 095**

**PATENT ABSTRACTS OF JAPAN, Band 3, Nr.
141 (E-153)(76) 21. November 1979; & JP-A-54
119614**

(73) Patentinhaber: **WERAC ELEKTRONIK GMBH**
**Schumannstrasse 35**
**W-6729 Wörth 1(DE)**

(72) Erfinder: **Lexe, Werner**
**Schumannstrasse 35**
**W-6729 Wörth 1(DE)**

(74) Vertreter: **Pfeifer, Hans-Peter, Dr.rer.nat.**
**Patentanwalt Nowackanlage 15**
**W-7500 Karlsruhe 1 (DE)**

## Beschreibung

Die Erfindung betrifft eine Antriebsvorrichtung, insbesondere für fördertechnische Zwecke und Torantriebe mit einem Elektromotor, einer Steuerlogik, einem mit der Antriebsvorrichtung gekoppelten Drehzahl-Istwertgeber, einem Sollwertgeber, einer im Betrieb mit dem Elektromotor gekoppelten Bremse, die eine Wicklung zur elektromagnetischen Lüftung der Bremse aufweist, und einer Drehzahlregelung, die eine Bremsregelungselektronik einschließt, von der die Energieversorgung der Bremswicklung in Abhängigkeit von dem Signal des Drehzahl-Istwertgebers und des Sollwertgebers geregelt wird.

In der Antriebstechnik ist es häufig erforderlich, den Übergang vom Stand in die gewünschte Arbeitsgeschwindigkeit möglichst sanft, also ohne plötzliche Beschleunigungsspitzen, zu gestalten. Dies gilt sowohl für die positive Beschleunigung beim Anfahren der Antriebsvorrichtung als auch für die negative Beschleunigung, wenn die Vorrichtung angehalten wird.

Die Erfindung richtet sich insbesondere auf Anwendungsfälle, bei denen für verhältnismäßig kurze Zeit große Antriebs- und Bremskräfte benötigt werden (Kurzzeitbetrieb). Im Bereich der Fördertechnik gehören hierzu beispielsweise Aufzüge und Aktenpaternoster.

Ein sanftes Abbremsen läßt sich mit Hilfe einer Motor-Drehzahlregelung erreichen. Für die beschriebenen Anwendungszwecke werden insbesondere Asynchronmotoren, vor allem Kurzschlußläufermotoren, eingesetzt. Da ihre Drehzahl sich weitgehend steif mit der Antriebsfrequenz ändert, können diese Motoren mit Hilfe eines vorgeschalteten Frequenzumformers sehr genau und mit hohen Bremskräften geregelt werden. Dieses Verfahren ist jedoch sehr aufwendig, insbesondere wenn Motoren mit mittleren bis größeren Leistungen oberhalb etwa 0,2 kW eingesetzt werden. Eine Alternative ist die Verwendung eines Drehstromstellers zum Antreiben und die Einspeisung von Gleichstrom in die Motorwicklung zum Bremsen. Diese Lösung erfordert jedoch ebenfalls einen großen schaltungstechnischen Aufwand.

Für den Fall eines Rolltreppenantriebs ist in den US-Patentschriften 4 600 865 und 4 482 853 die Möglichkeit beschrieben, eine mit dem Elektromotor gekoppelte Bremse zu verwenden, um ein sanftes Abbremsen zu erreichen. Dabei ist ein Drehzahlistwertgeber vorgesehen. Eine Drehzahlregelung regelt die Energieversorgung der Bremswicklung in Abhängigkeit von dem Signal des Drehzahlistwertgebers und eines Sollwertgebers, der ein rampenförmig ansteigendes und abfallendes Signal erzeugt.

Hiervon ausgehend liegt der Erfindung die Aufgabe zugrunde, eine Antriebsvorrichtung zur Verfügung zu stellen, die sowohl bei bremsender als auch bei schiebender (beschleunigender) Last ein zielgenaues Abbremsen und ein definiertes, sanftes Beschleunigen sicherstellt.

Die Aufgabe wird bei einer Antriebsvorrichtung der eingangs bezeichneten Art dadurch gelöst, daß die Drehzahlregelung eine Motorregelungselektronik mit einem Motorstellglied einschließt und daß die Antriebsbewegung unter kombinierter Einwirkung der Bremsregelungselektronik und der Motorregelungselektronik aus der normalen Betriebsgeschwindigkeit abgebremst und die Bremswicklung bei Erreichen des Zielpunktes durch ein Signal der Steuerlogik stromlos gesetzt wird.

Für den Fall eines Kupplungs-Brems-Antriebs ist eine gemeinsame Regelung der Kupplungs-Betätigung und der Bremsbetätigung aus der Publikation Reinecke: "Varistop, ein neuer Positionierantrieb für Industrienähmaschinen" in "Bekleidung und Wäsche", Heft 7, 1970, S. 466-470, bekannt.

Die erfindungsgemäße Lösung ist mit geringem Aufwand zu realisieren. Dies gilt vor allem bei solchen Anwendungsfällen, bei denen auch bisher schon eine elektromagnetisch gelüftete Federdruckbremse verwendet wurde, die mit dem Elektromotor gekoppelt ist und meist auf einer gemeinsamen Welle mit dem Motor sitzt.

Derartige Antriebsvorrichtungen werden beispielsweise bei Aufzügen benutzt, wobei die Federdruckbremse als Sicherheitsbremse dient, um den Aufzug auch bei Stromausfall festzuhalten. Die reibenden Elemente der Bremse werden im stromlosen Zustand von der Feder gegeneinander gedrückt. Zum Lösen dient ein elektromagnetischer Antrieb mit einer Wicklung. In ihrem Magnetfeld bewegt sich ein Kern, der mit einem der reibenden Elemente der Bremse, üblicherweise einem auf eine Bremsscheibe wirkenden Bremsklotz gekoppelt ist. Derartige Bremsen werden beispielsweise von der Firma Karl E. Brinkmann GmbH., Barntrup, Bundesrepublik Deutschland, vertrieben.

Die Federdruckbremsen werden üblicherweise im reinen Ein-Aus-Betrieb eingesetzt. Im stromlosen Zustand der Bremswicklung wirkt die volle Bremskraft. Im stromführenden Zustand dagegen ist die Bremse vollständig gelöst ("gelüftet").

Entsprechend setzt die Bremswirkung plötzlich ein, so daß kein sanftes Abbremsen erreicht wird. Der erfindungsgemäße Antrieb ermöglicht ein sanftes Abbremsen, ohne daß die Nothaltefunktion der Bremse beeinträchtigt wird.

Die erfindungsgemäße Drehzahlregelung kann auch beim Beschleunigen der Antriebsbewegung erfolgreich eingesetzt werden, um ein besonders sanftes Anfahren der Antriebsvorrichtung zu erreichen.

Das Regelungsverhalten läßt sich im angesprochenen Sinne durch eine Reihe bevorzugter Maßnahmen weiter verbessern, die einzeln oder in Kombination miteinander eingesetzt werden können.

Bevorzugt überlappen die Regelbereiche der Bremsregelungselektronik und der Motorregelungselektronik, d.h. in einem Teilbereich der Regelabweichung wird sowohl der Motor angesteuert als auch die Bremswicklung. Die Überlappung soll vorzugsweise mindestens 10%, besonders bevorzugt mindestens 20% des Stellbereichs der Motorregelung umfassen.

Als Drehzahl-Istwertgeber kann ein Analoggeber (Tachogenerator) eingesetzt werden. Besonders bevorzugt ist jedoch ein Digitalgeber, beispielsweise in Form einer Schlitzscheibe, die sich in einer Lichtschranke dreht. Bevorzugt sollte ein digitaler Drehzahl-Istwertgeber mindestens 500 Impulse/ sec. erzeugen. Dies entspricht bei einem zweipoligen Asynchronmotor, der bei 50 Hz Netzfrequenz mit 3000 Umdrehungen/min. läuft, mindestens 10 Impulsen pro Umdrehung.

Bei einem vierpoligen Motor, der nur mit halber Drehzahl läuft, sollten doppelt so viel Impulse pro Umdrehung erzeugt werden. Besonders gute Ergebnisse werden erzielt, wenn der digitale Drehzahlgeber mindestens 2000 Impulse /sec bei Normalgeschwindigkeit des Motors erzeugt.

Die Bremswicklung wird vorzugsweise mit Gleichstrom gespeist. Dabei ist auf eine geringe Restwelligkeit der Spannungsversorgung zu achten. Sie sollte vorzugsweise unter 5 % liegen. Dabei ist es vorteilhaft, die Versorgungsspannung durch Drehstromgleichrichtung zu erzeugen. Spannungsspitzen sollten verzögerungsfrei geglättet werden. Dies kann z.B. durch Abschneiden des Oberwellenanteils mit Hilfe bekannter elektronischer Bauelemente oder bei großen Leistungen durch einen geregelten Hochsetzsteller erfolgen.

Von erheblichem Einfluß auf das Regelverhalten ist auch die Zeitkonstante T im Spannungsversorgungskreis der Bremswicklung. Sie wird im wesentlichen durch die Induktivität L der Bremswicklung und den Ohmschen Widerstand R im Spannungsversorgungskreis gebildet, der sich wiederum aus dem Innenwiderstand der Bremswicklung und externen Ohmschen Widerständen zusammensetzt. Die Zeitkonstante läßt sich in bekannter Weise gemäß $T = L/R$ berechnen.

Der Innenwiderstand der Bremswicklung und ihre Induktivität stehen in engem Zusammenhang mit der Nennbremslast, auf die die Bremse ausgelegt ist. Bei gegebener Dimensionierung der Bremsteile wird diese nämlich durch die Andruckkraft der Feder bestimmt. Die Wicklung wiederum muß so ausgelegt sein, daß bei der Wicklungs-Versorgungsspannung, für die die Bremse ausgelegt ist, die Bremse gelüftet wird. Um eine ausreichende Feldstärke der Wicklung sicherzustellen, darf der Innenwiderstand der Wicklung nicht zu groß und ihre Induktivität nicht zu klein sein.

Im Rahmen der vorliegenden Erfindung wurde gefunden, daß es zweckmäßig ist, mit einem gegenüber dieser ausschließlich nach bremstechnischen Gesichtspunkten vorgenommenen Dimensionierung erhöhten Ohmschen Widerstand zu arbeiten.

Die Erhöhung des Ohmschen Widerstandes hat zum einen sicherheitstechnische Vorteile. Dadurch, daß in der Gleichspannungsversorgung der Bremswicklung vielfach ein Glättkondensator erforderlich ist, wird nämlich die Ansprechzeit der Bremse erhöht, so daß deren Sicherheitsfunktion beeinträchtigt werden könnte. Durch die Erhöhung des Ohmschen Widerstandes kann dies ausgeglichen werden.

Außerdem verbessert die Erhöhung des Ohmschen Widerstandes das Regelverhalten. In diesem Sinne sollte die Zeitkonstante mindestens 30%, bevorzugt mindestens 50% kleiner als die Zeitkonstante bei Nennbremslast ohne erhöhten Widerstand sein.

Praktisch läßt sich die Erhöhung des Ohmschen Widerstandes durch einen geeigneten Vorwiderstand im Spannungsversorgungskreis oder durch Erhöhung des Innenwiderstandes der Wicklung erreichen.

Bei einer kanpp dimensionierten Bremse könnte der Spannungsabfall an dem Vorwiderstand bzw. der durch den erhöhten Widerstand reduzierte Stromfluß dazu führen, daß die Bremse nicht mehr vollständig gelüftet wird. Dies läßt sich vermeiden, indem mit einer erhöhten Ausgangspannung gearbeitet und/oder eine an sich überdimensionierte Bremse verwendet wird, bei der durch Reduzierung der Andruckkraft der Feder mit einem gegenüber dem Nennbremsmoment reduzierten Bremsmoment gearbeitet wird. Die Verwendung einer überdimensionierten Federdruckbremse erweist sich darüber hinaus auch als vorteilhaft für das Dauerbetriebsverhalten der Antriebsvorrichtung.

Weiterhin ist für das Regelverhalten wichtig, daß die Hysterese des Bremsregelkreises klein ist. Hierzu ist darauf zu achten, daß der Luftspalt zwischen den reibenden Elementen relativ klein ist. Im Falle einer Bremse mit bis zu 16 Nm Bremsmoment sollte der Luftspalt unter 0,3 mm liegen.

Die Erfindung wird im folgenden anhand eines in den Figuren schematisch dargestellten Ausführungsbeispiels näher erläutert; es zeigen:

Fig. 1    ein Blockschaltbild einer Ausführungsform der Erfindung und

Fig. 2    eine graphische Darstellung zur Erläuterung der Drehzahlregelung

Ein Drehstromasynchrommotor 10 ist über symbolisch dargestellte Kopplungselemente 12 und 14 mit einer elektromagnetisch gelüfteten Federdruckbremse 16 und einem Drehzahl-Istwertgeber 18 gekoppelt. Die Wellen der Bremse 16 und des Motors 10 sind starr gekoppelt. Als Drehzahl-Istwertgeber wird vorzugsweise eine Schlitzscheibe mit einer aus einer Leuchtdiode und einem Fotoempfänger bestehenden Lichtschranke verwendet. In der Praxis sitzt die Nabe der Federdruckbremse unmittelbar auf der Motorachse. Auch die Schlitzscheibe des Istwertgebers 18 ist auf der gleichen Achse angebracht.

Der Motor wird aus einem Drehstromnetz über Phasenleitungen 20a, 20b und 20c und den Nulleiter 22 versorgt. Die Versorgungsleitungen sind über einen Schaltschütz 24 schaltbar, der von einem Startschalter 26 betätigt werden kann.

Die insgesamt mit 30 bezeichnete Drehzahlregelung umfaßt den Drehzahl-Istwertgeber 18, einen Digital-Analogwandler 32, einen Sollwertgeber 34, einen Proportional-Integralregler (PI-Regler) 36 mit Steuerlogik 37, einen Drehstromsteller 38 und die insgesamt mit 40 bezeichnete Spannungsversorgung für die Wicklung 16a der Federdruckbremse 16. Die Spannungsversorgung 40 umfaßt ein Bremsstellglied 42, einen Drehstromgleichrichter 44, einen Glättkondensator 44a und einen in Reihe mit der Wicklung 16a geschalteten Vorwiderstand 46.

Zur Anpassung der Verstärkung und des Regelverhaltens des PI-Reglers 36 an die Erfordernisse der Bremse 16 und ihrer Spannungsversorgung 40 ist eine Anpassungsschaltung 43 vorgesehen.

Die Elemente der Regelung sind über Steuerleitungen miteinander verbunden. Weitere für den Fachmann ohne weiteres selbstverständliche Einzelheiten, wie beispielsweise die Niederspannungsversorgung für die Elektronik und die zur Funkenstörung notwendigen Elemente sind der Übersichtlichkeit halber nicht dargestellt.

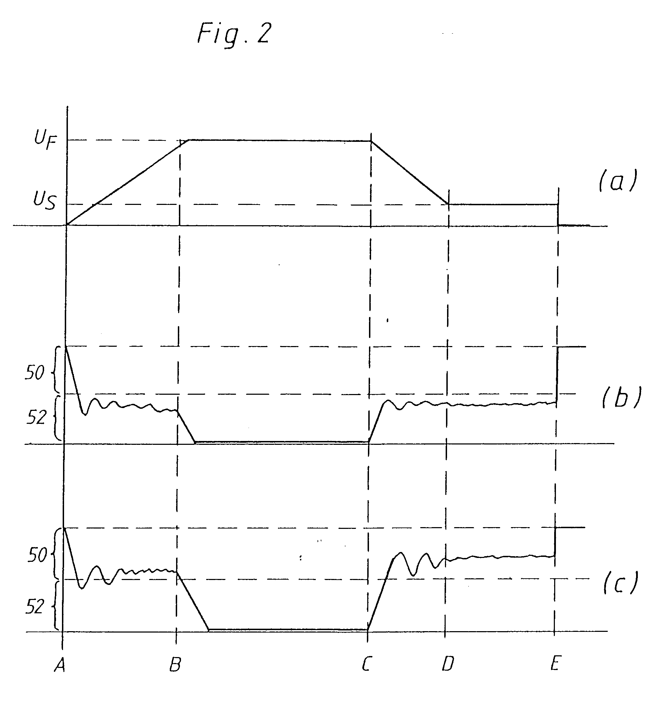

Die Funktion der Vorrichtung wird im folgenden anhand von Figur 2 näher erläutert. Grundlage ist dabei ein typischer Verlauf eines Regelzyklus, beispielsweise bei der Fahrt eines Aufzuges von einem Stockwerk zum anderen.

Die Kurve a in Fig. 2 stellt den zeitlichen Verlauf des Sollwertes dar, der von dem Sollwertgeber 34 erzeugt wird.

Wird zu einem Zeitpunkt A der Startschalter 26 betätigt, so geht ein Signal an die Steuerlogik 37. Dadurch wird eine allmählich steigende Sollwertkurve erzeugt. Bei Erreichen einer Spannung $U_F$, die der normalen Fahrgeschwindigkeit entspricht, bleibt das Sollwertsignal konstant.

Die Abbremsphase wird durch einen "Slow"-Schalter 52 zum Zeitpunkt C eingeleitet. Der Schalter kann beispielsweise an geeigneter Stelle im Fahrstuhlschacht angebracht sein und die Annäherung an das Zielstockwerk signalisieren.

Durch Betätigung des Schalters 52 wird eine allmähliche Abnahme der Sollwertkurve auf einen Wert $U_S$ (Zeitpunkt D) eingeleitet, der der gewünschten Schleichgeschwindigkeit entspricht, mit welcher sich die Last dem Zielpunkt annähern soll.

Der Anstieg und der Abfall des Sollwerts haben jeweils einen rampenförmigen Verlauf, wobei die Kurve jedoch auch gekrümmt sein kann.

Das Erreichen des Zielpunktes wird zum Zeitpunkt E durch einen Endschalter 56 gemeldet. Das Sollwertsignal geht auf Null.

Die Kurven b und c von Figur 2 zeigen in einer vereinfachten und übertriebenen Darstellung den Signalverlauf am Ausgang 36a des Reglers 36. Die Kurve b ist typisch für eine gegen die Antriebsrichtung wirkende Last (Betrieb im I. Quadranten Antreiben"). Kurve c zeigt den entsprechenden Verlauf bei einer gleichgerichtet mit dem Antrieb wirkenden last (Betrieb im II. Quadranten "Bremsen").

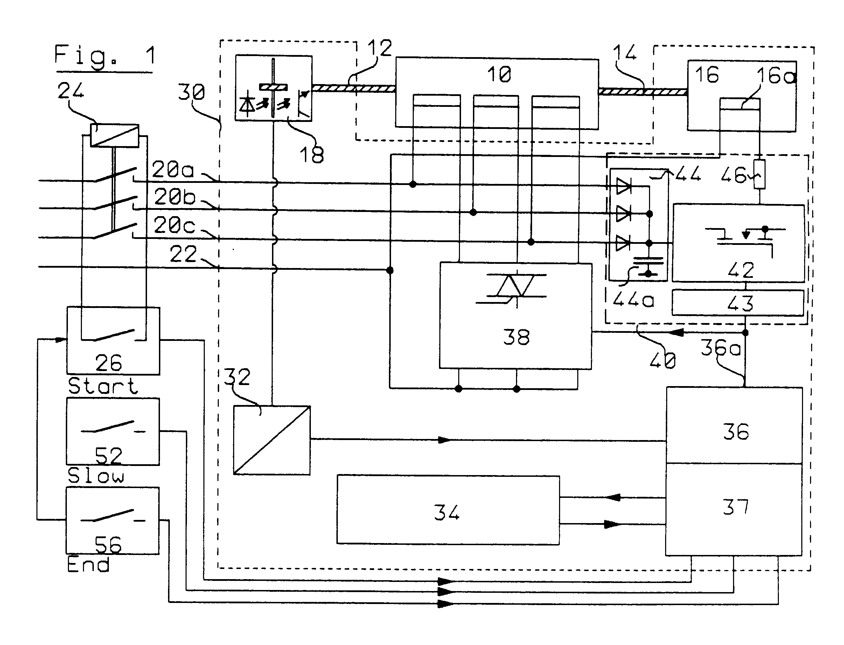

Charakteristisch für die in Figur 1 dargestellte Schaltung ist, daß ein gemeinsamer Regler 36 für den Motor 10 und die Bremse 16 verwendet wird. Augrund der Regelabweichung, welche aus den Signalen des Drehzahl-Istwertgebers 18 und des Sollwertgebers 34 gewonnen wird, erzeugt er ein Ausgangssignal, durch das sowohl der Motor als auch die Bremse gesteuert wird. Der Regler bildet also sowohl einen Teil der Motorregelungselektronik (zusammen mit dem Drehstromsteller 38) als auch der Bremsregelungselektronik (zusammen mit der Anpassungsschaltung 43 und der Spannungsversorgung 40). Die genannten Elemente sind vorzugsweise so aufeinander abgestimmt, daß in einem ersten Teilbereich des Regler-Ausgangssignals der Motor und ein einem zweiten Teilbereich die Bremse anspricht.

Ein wichtiger Gedanke der Erfindung besteht darin, daß eine wesentliche Verbesserung des Verlaufs der Drehmomentkennlinie erreicht werden kann, wenn die Regelbereiche von Motorregelungselektronik und Bremsregelungselektronik überlappen. In der dargestellten konkreten Ausführungsform bedeutet dies, daß in einem bestimmten Bereich der am Ausgang 36a anstehenden Spannung sowohl der Drehstromsteller 38 als auch die Spannungsversorgung 40 der Bremse 16 angesteuert werden. Dadurch werden vor allem in zweierlei Hinsicht Verbeserungen erreicht.

Zum einen hat die übliche Motorregelungselektronik mit einer Phasenanschnittssteuerung im Bereich geringer elektrischer Energiezufuhr (kleiner Ansteuerwinkel), bedingt durch die quadratische Abhängigkeit des Drehmoments von der Spannung, eine reaktionsschwache Zone.

Zum zweiten haben sämtliche bekannten Bremsen mit elektromagnetischer Lüftung eine Hysterese, d.h. die Spannung, die zum Abheben der Bremse erforderlich ist, ist höher als die Rückfallspannung.

Durch beide Effekte entstehen im Übergangsbereich zwischen Motoransteuerung und Bremsansteuerung starke Nichtlinearitäten der aus Motordrehmoment und Bremsdrehmoment resultierenden Gesamtdrehmomentkurve, die durch das Überlappen der Drehbereiche weitgehend reduziert werden können.

Bei der dargestellten analogelektronischen Realisierung spricht in einem ersten Spannungsbereich 50 ("Bremsstellbereich") die Bremse und in einem zweiten Spannungsbereich 52 ("Motorstellbereich") der Motor auf das Ausgangssignal an. Innerhalb des Stellbereiches 50 nimmt mit abnehmender Reglerausgangsspannung die an der Wicklung 16a anliegende Spannung zu, so daß die Bremse lüftet. Innerhalb des Stellbereichs 52 nimmt mit abnehmender Reglerausgangsspannung der Durchlaßbereich des Phasenanschnitt-Drehstromstellers 38 zu, so daß das Antriebsdrehmoment des Motors steigt. Bei der erwähnten bevorzugten Ausführungsform sprechen in einem mittleren Spannungsbereich sowohl der Drehstomsteller 38 als auch die Spannungsversorgung 40 der Bremse an.

Da der Motor zum Zeitpunkt A zunächst steht, ergibt sich mit steigendem Sollwert verhältnismäßig schnell eine große Regelabweichung. Das Ausgangssignal des Reglers 36, der vorzugsweise ein Proportional-Integral-Regelverhalten hat, ändert sich schnell in Richtung auf den Motorstellbereich. Dabei nimmt die an der Wicklung 16a anliegende Spannung zu, so daß die Bremse lüftet. Solange sich das Reglerausgangssignal im Bremsstellbereich 50 befindet, ist der Motor stromlos. Der von dem Startschalter 26 zum Zeitpunkt A betätigte Schaltschütz 24 wird folglich im stromlosen Zustand geschaltet und dadurch geschont.

Wenn das Ausgangssignal des Reglers 36 in den Motorstellbereich 52 gelangt, läuft der Motor an. Dies führt vielfach zu einer unerwünscht schnellen Beschleunigung, die durch die Regelung ausgeglichen wird. Die dadurch und durch die Änderung der Last hervorgerufenen Regelschwingungen sind in Fig. 2 übertrieben dargestellt. Kurve c zeigt, daß im Fall einer schiebenden Last vorteilhafterweise die Regelung wieder in den Bremstellbereich zurückschwingt, so daß die Bremse schon in der Anfahrphase des Antriebs für einen sanften Anlauf sorgt.

Zweckmäßigerweise schaltet eine in der Steuerlogik 37 enthaltene Vergleichsschaltung bereits kurz vor dem Erreichen des Sollwertes $U_F$ die Regelungselektronik aus (Zeitpunkt B). Dabei ist der Regler vorteilhaft so ausgebildet, daß seine Ausgangsspannung schnell, aber kontrolliert auf einen Wert fällt, der dem maximalen Motorantrieb entspricht. Der Drehstromsteller 38 öffnet vollständig, so daß der Motor mit vollem Drehmoment und normalem Fahrgeräusch läuft.

Die Abnahme des Sollwertes zum Zeitpunkt C führt zu einer negativen Regelabweichung und damit zu einem schnellen Anstieg des Ausgangssignal des Reglers 36 in Richtung auf den Bremstellbereich 50. Bei einer bremsenden Last wird dieser gemäß Kurve b unter Umständen nicht erreicht. Vielmehr erfolgt die Regelung vollständig im Motorstellbereich.

Bei einer schiebenden Last tritt das Reglerausgangssignal gemäß Kurve c in den Bremstellbereich 52 ein. die zunehmende Signalspannung entspricht einer abnehmenden Spannung an der Bremswicklung, bis die Bremse greift. Kurve c zeigt zwischen den Zeitpunkten C und D in übertriebener Darstellung die Regelschwingungen.

Auch nachdem der Sollwert auf den Schleichwert $U_S$ gefallen ist (Zeitpunkt D), sorgt die Regelung für einen gleichmäßigen Lauf und eine sanfte Annäherung an die Schleichgeschwindigkeit. Die Schwankungen in der Reglerausgangsspannung stellen Reaktionen des Reglers auf Änderungen der Last dar, die durch die Regelung ausgeglichen werden. Die Dauer des Betriebs mit der Schleichgeschwindigkeit sollte nicht zu groß sein, um ein übermäßige Erwärmung des im Phasenanschnitt betriebenen Motors zu vermeiden. Zweckmäßigerweise läßt sich der Zeitpunkt D dadurch optimieren, daß eine einstellbare Verzögerungsschaltung vorgesehen ist, die das Signal des "Slow"-Schalters 52 verzögert.

Durch das Signal des Endschalters 56 wird das Reglerausgangssignal mittels der Steuerlogik 37 auf Maximalspannung gestellt. Die Bremse greift voll. Durch ein Signal von dem Endschalter 56 wird auch der Startschalter 26 geöffnet. Da somit der Schütz 24 öffent, wird die Schaltung vom Netz getrennt. Die Bremse erhält keinen Strom und wirkt als Sicherheitsbremse.

Die Erfindung wurde anhand einer analogelektronischen Realisierung beschrieben, jedoch sind zahlreiche andere Realisierungen möglich. Insbesondere kann eine Mikroprozessorsteuerung vorteilhaft eingesetzt werden. In diesem Falle werden die Signale des Istwertgebers an den Mikroprozessor gemeldet, der sie mit einer einprogrammierten Sollwertkurve vergleicht und aus der so ermittelten Regelabweichung die Steuersignale sowohl für den Motor als auch für die Bremse erzeugt. Die hierzu notwendigen Maßnahmen sind dem Fachmann aufgrund der vorliegenden Beschreibung ohne weiteres zugänglich.

Eine Mikroprozessorsteuerung kann noch feiner auf die Erfordernisse des Einzelfalls (Last, Motorcharakteristik, Bremscharakteristik, gewünschtes Anfahr- und Abbremsverhalten) abgestimmt werden. Sie erweist sich deswegen vor allem im Bereich höherer Lasten und Motorleistungen als vorteilhaft. Mit einer Mikroprozessorsteuerung läßt sich ein noch stabileres, höher dynamisches Regelverhalten erreichen als mit einer Analogregelung. Bei Verwendung einer selbstoptimierenden Mikroprozessorregelung entfällt darüberhinaus die bei analogelektronischer Ausführung notwendige Optimierungsarbeit.

## Patentansprüche

1. Antriebsvorrichtung, insbesondere für fördertechnische Zwecke und Torantriebe, mit

   einem Elektromotor (10),

   einer Steuerlogik (37),

   einer Drehzahlregelung mit einem mit der Antriebsvorrichtung gekoppelten Drehzahl-Istwertgeber (18) und einem Sollwertgeber (34) und

   einer Bremse (16), die eine Wicklung (16a) zur elektromagnetischen Lüftung der Bremse und eine Welle aufweist, welche im Betrieb mit der Welle des Motors (10) starr gekoppelt ist,

   bei welcher

   die Drehzahlregelung eine Motorregelungselektronik (36,38) mit einem Motorstellglied (38) einschließt,

   die Drehzahlregelung eine Bremsregelungselektronik (36,42,43) einschließt, von der die Energieversorgung der Bremswicklung (16a) in Abhängigkeit von dem Signal des Drehzahl-Istwertgebers (18) und des Sollwertgebers (34) geregelt wird, und

   die Antriebsbewegung unter kombinierter Einwirkung der Bremsregelungselektronik (36,42,43) und der Motorregelungselektronik (36,38) aus der normalen Betriebsgeschwindigkeit auf eine Schleichgeschwindigkeit abgebremst und die Bremswicklung beim Erreichen des Zielpunktes durch ein Signal der Steuerlogik stromlos gesetzt wird.

2. Antriebsvorrichtung nach Anspruch 1, bei welcher sich die Regelbereiche der Motorregelungselektronik (36,38) und der Bremsregelungselektronik (36,42,43) teilweise überlappen.

3. Antriebsvorrichtung nach Anspruch 1, bei welcher die Motorregelungselektronik und die Bremsregelungselektronik einen gemeinsamen Regler (36) aufweisen.

4. Antriebsvorrichtung nach Anspruch 1, bei welcher der Drehzahl-Istwertgeber (18) ein digitaler Drehzahlgeber ist, der bei der Normalgeschwindigkeit des Motors mindestens 500 Impulse pro Sekunde erzeugt.

5. Antriebsvorrichtung nach Anspruch 1, bei welcher die Spannungsversorgung (40) der Bremswicklung (16a) als Gleichspannungsversorgung mit geringer Restwelligkeit ausgebildet ist.

6. Antriebsvorrichtung nach Anspruch 3, bei welcher die Spannungsversorgung (40) der Bremswicklung (16a) einen Drehstromgleichrichter (44) enthält.

7. Antriebsvorrichtung nach Anspruch 1, bei welcher der Ohmsche Widerstand im Spannungsversorgungskreis der Bremse (16) so erhöht ist, daß die durch die Induktivität der Bremswicklung (16a) und den Ohmschen Widerstand in ihrem Spannungsversorgungskreis gebildete Zeitkonstante um so viel vermindert ist, daß die Verlängerung der Ansprechzeit der Bremse durch einen in ihrer Spannungsversorgung notwendigen Glättungskondensator ausgeglichen wird.

8. Antriebsvorrichtung nach Anspruch 1, bei welcher der Ohmsche Widerstand im Spannungsversorgungskreis der Bremse (16) so erhöht ist, daß die durch die Induktivität der Bremswicklung (16a) und den Ohmschen Widerstand in ihrem Spannungsversorgungskreis gebildete Zeitkonstante mindestens 50% kleiner ist als die Zeitkonstante bei Nennbremslast ohne erhöhten Widerstand.

9. Antriebsvorrichtung nach Anspruch 1, bei welcher die Hysterese des Bremsregelkreises klein ist.

## Claims

1. Driving device, in particular for handling system purposes and gate driving mechanisms, having

   an electric motor (10),

   a control logic (37),

   an automatic speed control system with a speed actual value sensor (18) coupled to the driving device and a setpoint generator (34) and

a brake (16), which has a winding (16a) for electromagnetic lifting of the brake and a shaft which in operation is rigidly coupled to the shaft of the motor (10),

wherein

the automatic speed control system comprises motor control electronics (36, 38) with a motor actuator (38),

the automatic speed control system comprises brake control electronics (36, 42, 43), by means of which the power supply of the brake winding (16a) is controlled as a function of the signal of the speed actual value sensor (18) and of the setpoint generator (34), and

the drive movement, under the combined action of the brake control electronics (36, 42, 43) and the motor control electronics (36, 38), is braked from the normal operating speed to a crawl speed and the brake winding, on reaching the target point, is de-energized by a signal of the control logic.

2. Driving device according to claim 1, wherein the control ranges of the motor control electronics (36, 38) and the brake control electronics (36, 42, 43) partially overlap.

3. Driving device according to claim 1, wherein the motor control electronics and the brake control electronics have a common controller (36).

4. Driving device according to claim 1, wherein the speed actual value sensor (18) is a digital tacho-generator which, at the normal speed of the motor, generates at least 500 pulses per second.

5. Driving device according to claim 1, wherein the power supply (40) of the brake winding (16a) takes the form of a d.c. voltage supply with a low residual ripple.

6. Driving device according to claim 3, wherein the power supply (40) of the brake winding (16a) includes a three-phase a.c. rectifier (44).

7. Driving device according to claim 1, wherein the ohmic resistance in the power supply circuit of the brake (16) is so increased that the time constant formed by the inductance of the brake winding (16a) and the ohmic resistance in its power supply circuit is reduced by a sufficient extent to compensate the prolongation of the response time of the brake by a smoothing capacitor required in its power supply.

8. Driving device according to claim 1, wherein the ohmic resistance in the power supply circuit of the brake (16) is so increased that the time constant formed by the inductance of the brake winding (16a) and the ohmic resistance in its power supply circuit is at least 50% lower than the time constant at rated brake load without increased resistance.

9. Driving device according to claim 1, wherein the hysteresis of the brake control circuit is low.

**Revendications**

1. Dispositif d'entraînement, en particulier pour les applications en manutention et les entraînements de portes, comprenant

un moteur électrique (10),

une logique de commande (37),

un régulateur de vitesse comportant un indicateur de valeur effective de vitesse (18) couplé au dispositif d'entraînement et un indicateur de valeur de consigne (34), et

un frein (16) présentant un enroulement (16a) pour l'aération électromagnétique du frein et un arbre qui en fonctionnement est couplé de façon rigide à l'arbre du moteur (10),

dans lequel

le régulateur de vitesse inclut une électronique de régulation du moteur (36,38) comportant un organe de réglage de moteur (38),

le régulateur de vitesse inclut une électronique de régulation de freinage (36,42,43), par laquelle l'alimentation en énergie de l'enroulement de freinage (16a) est régulée en fonction du signal de l'indicateur de valeur effective de vitesse (18) et de l'indicateur de valeur de consigne (34), et

le mouvement d'entraînement est freiné de la vitesse de fontionnement normale à une vitesse lente sous l'action combinée de l'électronique de régulation de freinage (36,42,43) et de l'électronique de régulation du moteur (36,38) et l'enroulement de freinage est privé de courant par un signal de la logique de commande lorsque la valeur cible est atteinte.

2. Dispositif d'entraînement selon la revendication 1, dans lequel les domaines de régulation de l'électronique de régulation du moteur (36,38) et de l'électronique de régulation de freinage (36,42,43) se recouvrent partiellement.

3. Dispositif d'entraînement selon la revendication 1, dans lequel l'électronique de régulation du moteur et l'électronique de régulation de freinage comportent un régulateur commun (36).

4. Dispositif d'entraînement selon la revendication 1, dans lequel l'indicateur de valeur effective de vitesse (18) est un indicateur de vitesse numérique qui produit au moins 500 impulsions par seconde à la vitesse normale du moteur.

5. Dispositif d'entraînement selon la revendication 1, dans lequel la source de tension (40) de l'enroulement de freinage (16a) est sous forme d'une source de tension continue à faible ondulation résiduelle.

6. Dispositif d'entraînement selon la revendication 3, dans lequel la source de tension (40) de l'enroulement de freinage (16a) contient un redresseur de courant alternatif (44).

7. Dispositif d'entraînement selon la revendication 1, dans lequel la résistance ohmique dans le circuit d'alimentation en tension du frein (16) est accrue de telle sorte que la constante de temps formée par l'inductance de l'enroulement de freinage (16a) et la résistance ohmique dans son circuit d'alimentation en tension est d'autant plus diminuée que l'allongement du temps de réponse du frein est compensé par un condensateur de lissage nécessaire dans sa source de tension.

8. Dispositif d'entraînement selon la revendication 1, dans lequel la résistance ohmique dans le circuit d'alimentation en tension du frein (16) est accrue de telle sorte que la constante de temps formée par l'inductance de l'enroulement de freinage (16a) et la résistance ohmique dans son circuit d'alimentation en tension est au moins de 50% inférieure à la constante de temps pour la charge de freinage nominale sans résistance accrue.

9. Dispositif d'entraînement selon la revendication 1, dans lequel l'hystérésis du circuit de régulation de freinage est faible.

Fig. 1

Fig. 2